# EUROPÄISCHE PATENTSCHRIFT

(11) **EP 1 474 816 B1**
(45) Veröffentlichungstag und Bekanntmachung des Hinweises auf die Patenterteilung: **12.04.2006**
(21) Anmeldenummer: 03739429.3
(22) Anmeldetag: 31.01.2003
(51) Int. Cl.: H01H 37/32, F03G 7/06

(54) **AKTOREINRICHTUNG MIT AKTORELEMENT AUS MEMORY-METALL UND MECHANISCHEN VERBINDUNGSMITTELN**
ACTUATOR COMPRISING AN ACTUATOR ELEMENT PRODUCED FROM MEMORY METAL AND MECHANICAL CONNECTING MEANS
DISPOSITIF ACTIONNEUR AVEC ELEMENT ACTIONNEUR CONSTITUE D'UN METAL A MEMOIRE DE FORME ET MOYENS DE LIAISON MECANIQUES

(30) Priorität: 12.02.2002 DE 10205760
(43) Veröffentlichungstag der Anmeldung: 10.11.2004
(73) Patentinhaber: SIEMENS AKTIENGESELLSCHAFT, 80333 München (DE)
(72) Erfinder: GREINER, Robert, 91083 Baiersdorf (DE); KAUTZ, Stefan, 91094 Langensendelbach (DE); ZEININGER, Heinz, 90587 Obermichelbach (DE)
(86) Internationale Anmeldenummer: PCT/DE2003/000280
(87) Internationale Veröffentlichungsnummer: WO 2003/069644

(56) Entgegenhaltungen:
- WO-A-90/15928

## Beschreibung

Die Erfindung bezieht sich auf eine Aktoreinrichtung mit einem Aktorelement aus einem Memory-Metall,
- das in einem Ausgangszustand eine erste (Niedertemperatur-)Form einnimmt,
- dem bei einer Glühtemperatur eine zweite (Hochtemperatur-)Form eingeprägt ist,
- dem Mittel zum Aufheizen auf ein Temperaturniveau zugeordnet sind, bei dem die zweite (Hochtemperatur-)Form eingenommen wird
und
- das in einem Teilbereich mit Mitteln zur mechanischen Verbindung versehen ist.
Eine derartige Aktoreinrichtung geht aus der DE 100 30 394 C1 hervor.

Aktorelemente - auch als "Aktuatorelemente" bezeichnet- aus Memory-Metallen werden seit einiger Zeit auf verschiedenen technischen Gebieten eingesetzt wie z.B. in elektrischen Schalteinrichtungen (vgl. die genannte DE-C1-Schrift). Ihr Material, das auch als Formgedächtnis-Legierung bezeichnet wird, hat die Eigenschaft, dass es temperaturabhängig seine Form wandeln kann. Dementsprechend nimmt es in einem Ausgangszustand eine erste (Niedertemperatur-)Form ein. Oberhalb einer Phasenumwandlungstemperatur wandelt sich das Gefüge des Memory-Metalls von einer Tieftemperaturphase in eine Hochtemperaturphase (von "Martensit" zu "Austenit") um. Die Memory-Eigenschaften des Materials ausnutzend ist nämlich dem Element eine zweite (Hochtemperatur-)Form mit dieser Hochtemperaturphase eingeprägt worden. Entsprechende Metalle und deren Memory-Eigenschaften sind bekannt (vgl. z.B. das Buch D. Stöckel [Hrsg.]: "Legierungen mit Formgedächtnis", Expert-Verlag, Ehningen (DE), 1988, insbesondere die Seiten 64 bis 79).

Eine Integration von derartigen Aktorelementen aus einem Memory-Metall in Systeme/Einrichtungen geschieht meistens über konventionelle, teils hochpräzise Konstruktionen und Verbindungstechniken wie z.B. Lötverbindungen, Verschraubungen, Nieten, Klemmungen oder Zusammenquetschungen (sogenanntes "Crimpen"). Entsprechende Verbindungstechniken sind auch für das aus der genannten DE-C1-Schrift zu entnehmende Aktorelement vorgesehen.

Dokument WO-A-9015928 offenbart eine Aktoreinrichtung gemäß Oberbegriff des Anspruchs 1, wobei ferner die Verbindungsmittel das Aktorelement in einem vorgegebenen Teilbereich umschließen und zumindest teilweise aus einem Kunststoffmaterial bestehen.

Aufgabe der vorliegenden Erfindung ist es nun, die Aktoreinrichtung mit den eingangs genannten Merkmalen dahingehend auszugestalten, dass die seinem Aktorelement zugeordneten Verbindungsmittel einfach und kompakt auszubilden sind, wobei eine systemangepasste Integration ermöglicht wird und ein mechanisch sicherer Aufbau zu gewährleisten ist.

Diese Aufgabe wird erfindungsgemäß durch die Merkmale des Anspruchs 1, gelöst wobei das Kunststoffmaterial bei Raumtemperatur eine thermische Leitfähigkeit mit einer Wärmeleitzahl λ von mindestens 1,0 W/m·K und/oder eine elektrische Leitfähigkeit κ von mindestens 0,001 S/cm aufweist. Als Kunststoffmaterial ist in diesem Zusammenhang entweder ein Kunststoff-Basismaterial zu verstehen, das die geforderten Leitfähigkeitswerte selbst erfüllt (sogenannter "selbstleitender Kunststoff"); oder es handelt sich hierbei um eine Werkstoff-Zusammensetzung/-kombination aus einem Kunststoff-Basismaterial und mindestens einem weiteren Werkstoff (häufig kein Kunststoff).

Um die Aktorfunktion des Memory-Metall-Elementes optimal zu nutzen, da das Memory-Metall-Aktorelement bekanntlich bei Temperatur- und/oder Druckänderungen seine Form verändert, muss eine thermische bzw. elektrisch leitende Verbindung zu dem Memory-Metall-Element bestehen. Dabei muss das Memory-Metall-Element zum einen in dem Kunststoffmaterial in dem vorbestimmten Teilbereich fest verankert sein; und zum anderen darf die gewünschte Formänderung beim Übergang von der Niedertemperaturform in die Hochtemperaturform nicht beeinträchtigt werden, wobei im Bereich der Formänderung das Memory-Metall-Element eine ungehinderte Bewegung ausführen muss. Diese Forderungen lassen sich vorteilhaft bei dem erfindungsgemäß ausgestalteten Aktorelement gewährleisten. Dabei können entsprechende Aktorelemente rationell und damit kostengünstig in elektromagnetische und elektronische Komponenten und/oder Systeme integriert werden, wobei Anschlussdrähte in Spritzgussteilen integriert und leitende Schichten neben isolierenden Schichten vorzugsweise in einem Zweikomponenten-Spritzgießverfahren aufgebracht werden können. Durch die Verankerung des Memory-Metall-Elementes in einem vorzugsweise spritzgegossenen Kunststoffteil lassen sich Fertigungsschritte/-zeiten reduzieren sowie aufwendige Nachbearbeitungen einsparen.

Entscheidend für die erfindungsgemäßen Aktoreinrichtungen ist, dass durch eine Kombination der Eigenschaften "Strukturwerkstoff" und "Funktionswerkstoff" des gewählten Kunststoffmaterials die Bestromung bzw. die Temperaturänderung über den Struktur- und Funktionswerkstoff erfolgt und damit die Aktorfunktion des Aktorelementes aus dem Memory-Metall ausgelöst wird. Dabei gewährleistet das Merkmal "Strukturwerkstoff" die sichere Fixierung des Aktorelementes in dem Teilbereich, der im Allgemeinen ein Endbereich ist, während das Merkmal "Funktionswerkstoff" eine gute elektrische oder thermische Anbindung des Aktorelementes ermöglicht. Mit bekannten, insbesondere gefüllten Kunststoffmaterialien sind dabei die Forderung bzgl. der elektrischen Leitfähigkeit und/oder der thermischen Leitfähigkeit ohne Weiteres, vielfach auch gleichzeitig zu erfüllen, da elektrisch leitende Kunststoffmaterialien im Allgemeinen auch hinreichend gut thermisch leitend sind.

Vorteilhafte Ausgestaltungen der erfindungsgemäßen Aktoreinrichtung gehen aus den abhängigen Ansprüchen hervor.

So werden vorzugsweise Kunststoffmaterialien mit bei Raumtemperatur möglichst hoher thermischer Leitfähigkeit, insbesondere mit einer Wärmeleitzahl λ von mindestens 1,5 W/m·K, vorzugsweise mindestens 2,0 W/m.K, und/oder mit einer möglichst hohen elektrischen Leitfähigkeit κ von insbesondere mindestens 0,01 S/cm, vorzugsweise mindestens 0,1 S/cm, vorgesehen. Außerdem können vorteilhaft die Verbindungsmittel ein ein Endstück des Aktorelementes umschließendes Kunststoffteil aus dem vorbestimmten Kunststoffmaterial sein. Mit diesem Kunststoffteil lässt sich dann eine gute Verformung des Aktorelementes bei gleichzeitig sicherer Fixierung gewährleisten.

Aus Gründen einer guten elektrischen Isolation des Aktorelementes kann das Kunststoffteil gegebenenfalls eine Umhüllung aus einem Isolationsmaterial aufweisen.

Zur Bestromung des Aktorelementes wird vorteilhaft ein elektrischer Anschlussleiter vorgesehen, der über das Kunststoffmaterial mit dem Aktorelement elektrisch leitend verbunden ist.

Zur Einstellung der vorbestimmten elektrischen und/oder thermischen Leitfähigkeit des Kunststoffmaterials wird dieses vorzugsweise mit einer entsprechenden Menge mindestens eines hierfür geeigneten Füllstoffs oder eines sonstigen Additiv-Materials versehen.

Weitere vorteilhafte Ausgestaltungen der erfindungsgemäßen Aktoreinrichtung sind den vorstehend nicht angesprochenen Ansprüchen zu entnehmen.

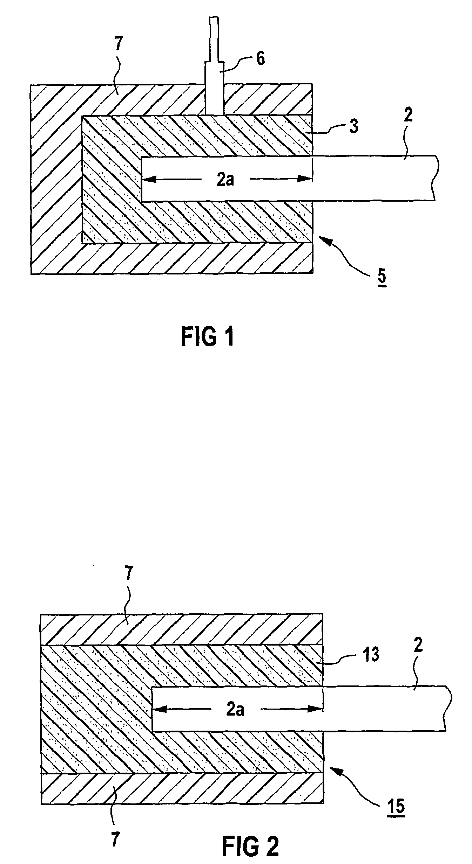

Zur weiteren Erläuterung der Erfindung wird nachfolgend auf die Zeichnung Bezug genommen, in der vorteilhafte Ausgestaltungen von erfindungsgemäßen Aktorelementen veranschaulicht sind. Dabei zeigen deren Figuren 1 und 2 jeweils in Schnittansicht einen Endbereich einer erfindungsgemäß ausgestalteten Aktoreinrichtung.

Aktorelemente, wie sie sich für Aktoreinrichtungen nach der Erfindung vorsehen lassen, sind an sich bekannt (vgl. die eingangs genannte DE-C1-Schrift oder die DE 101 29 862 A1). Sie sind mit ebenfalls bekannten Memory-Metall-Legierungen (Formgedächtnis-Legierungen, Shape-Memory-Alloys) aufgebaut und weisen im Allgemeinen eine langgestreckte Band- oder Drahtform auf. In Figur 1 ist von einem entsprechenden Aktorelement 2 ein Endstück 2a ersichtlich. Dieses Endstück ist vollständig (d.h. sowohl in Umfangsrichtung bzgl. der Hauptausdehnungsrichtung bzw. Längsachse des Elementes als auch stirnseitig) oder auch nur in Umfangsrichtung von einem Kunststoffteil bzw. -block 3 aus einem bestimmten Funktionswerkstoff umschlossen bzw. in dieses Teil 3 hineinragend eingebettet. Da bei der in der Figur allgemein mit 5 bezeichneten Aktoreinrichtung die Temperaturänderung des Aktorelementes für den Phasenübergang des Memory-Metalls durch Bestromen (d.h. durch Beaufschlagung mit einem über das Element zu führenden Strom) hervorgerufen werden soll, wird eine elektrisch leitende Verbindung zwischen einem elektrischen Anschlussleiter 6 und dem Endstück 2a des Memory-Element 2 über das Kunststoffteil 3 hergestellt. Die Ausleitung des Stromes an dem anderen Endstück des Elementes ist in der Figur nicht ausgeführt.

Um eine Stromzuführung zu ermöglichen, wird erfindungsgemäß für das Kunststoffteil 3 ein Funktionswerkstoff bzw. ein - material gewählt, das eine für diese Funktion hinreichend hohe elektrische Leitfähigkeit besitzt. Dies ist mit einem Werkstoff zu gewährleisten, dessen elektrische Leitfähigkeit κ mindestens 0,001 S/cm ("Siemens pro Zentimeter"), vorzugsweise mindestens 0,01 S/cm, insbesondere über 0,1 S/cm, beträgt. Entsprechende Werkstoffe, die nachfolgend allgemein als "Kunststoffmaterialien" bezeichnet werden, sehen insbesondere Polymere als Basismaterial vor. Beispiele entsprechender Basismaterialien sind Thermoplaste, insbesondere spezielle technische Kunststoffe wie PC, PA oder PET sowie spezielle Hochleistungskunststoffe wie PEEK oder PPS. Auch warm- oder insbesondere kalthärtende Gießharze kommen als Basismaterial in Frage. Der Vorteil kalthärtender Gießharze ist der geringe Einfluss des Härtungsprozesses auf die Memory-Metall-Charakteristik.

Das zu wählende Basismaterial enthält im Allgemeinen die elektrische Leitfähigkeit erhöhende Füllstoffe oder sonstige Additiv-Materialien in zumindest weitgehend homogener Verteilung bzw. Einlagerung (vgl. das Buch "Elektrisch leitende Kunststoffe", Hrsg.: H.J.Mair und S.Roth, C.Hanser Verlag München / Wien, 1989, insbesondere Seiten 1 - 7, 59 - 69, 201 - 205, 237 - 246, 253 - 263; oder die Zeitschrift "Kunststoffe", Band 78, Heft 1, 1988, Seiten 53 - 58). Solche Füllstoffe sind insbesondere Metalloxidteilchen wie Al₂O₃, SiO₂ oder TiO₂ (vgl. auch DE 30 32 744 A1; WO 00/44823), Metallfasern, -Flakes (-Plättchen), Kohlenstofffasern oder spezielle Rußpartikel (vgl. auch Technische Akademie Esslingen: "Elektrisch leitende Kunststoffe", Symposium 15. und 16. April 1985, Beitrag 4.). Konkrete Beispiele sind mit Kohlenstofffasern gefüllte Polycarbonate der Firma "LNP Engineering Plastics", Exton (US), z.B. mit den Handelsnamen "Stat-Kon DC-1004".

In bekannter Weise lässt sich je nach Füllgrad des Kunststoff-Basismaterials die elektrische Leitfähigkeit beeinflussen. Gegebenenfalls kann aber auch die geforderte elektrische Leitfähigkeit mit ungefüllten, sogenannten selbstleitenden Kunststoffen (mit intrinsischer Leitfähigkeit) gewährleistet werden (vgl. z.B. das vorgenannte, von H.J.Mair und S.Roth herausgegebene Buch, Seiten 253 - 263).

Wie ferner aus Figur 1 hervorgeht, kann das Endstück 2a des Aktorelementes 2 mit seinem Kunststoffteil 3 zusätzlich noch eine Umhüllung 7 aus einem isolierenden Kunststoff aufweisen.

Die Umhüllung dient vorzugsweise als Funktionsteil zur (räumlichen) Integration der einzelnen Teile.

Kann auf eine Bestromung des Aktorelementes 2 zu dessen Erhitzung verzichtet werden und die für den Phasenübergang erforderliche Temperaturerhöhung durch Änderung der Umgebungstemperatur herbeigeführt werden, so steht für den Funktionswerkstoff des Kunststoffteils 3 nicht die elektrische Leitfähigkeit im Vordergrund, sondern dessen thermische Leitfähigkeit. Ein entsprechendes Ausführungsbeispiel ist in Figur 2 angedeutet. Bei der dort mit 15 bezeichneten Aktoreinrichtung wird für die endseitige Einbettung des Endstücks 2a des Aktorelementes 2 in ein Kunststoffteil 13 als Funktionswerkstoff ein Kunststoffmaterial gewählt, das eine hohe thermische Wärmeleitfähigkeit besitzt. Dabei soll eine Wärmeleitzahl λ von mindestens 1,0 W/m.K ("Watt pro Meter und Kelvin"), vorzugsweise von mindestens 1,5 W/m·K, insbesondere von über 2,0 W/m·K, eingehalten werden. Entsprechende Kunststoff-Compounds aus einem Kunststoff-Basismaterial wie insbesondere einem Polymer mit eingelagerten, die thermische Leitfähigkeit erhöhenden Partikeln(Füllstoffen bzw. Additiven), sind an sich bekannt (vgl. die genannte WO00/44823 oder die WO01/96458 A1). Beispiele entsprechender Basismaterialien sind Thermoplaste, insbesondere spezielle technische Kunststoffe wie PC oder PA sowie spezielle Hochleistungskunststoffe wie PEEK. Konkrete Beispiele für gefüllte Kunststoffe sind Polyamide der Firma "Frisetta", Schönau (DE), z.B. mit dem Handelsnamen "Frianyl A63", oder mit Bornitid gefüllte Polycarbonate der erwähnten Firma "LNP Engineering Plastics", z.B. mit der Bezeichnung "OTF 202-10".

Auch bei der in Figur 2 gezeigten Ausführungsform kann die Aktoreinrichtung 15 eine Umhüllung 7 des Kunststoffteils 13 aus einem isolierenden Kunststoff aufweisen.

Bei der vorstehend an Hand der Figur 2 erläuterten Ausführungsform der Aktoreinrichtung 15 wurde davon ausgegangen, dass das Aktorelement 2 im Wesentlichen nur in dem als Teilbereich vorgesehenen Endbereich 2a über das Kunststoffteil 13 über die Phasenumwandlungstemperatur erwärmt werden soll. Selbstverständlich ist auch eine indirekte Erwärmung des gesamten Elementes über seine Umgebung beispielweise mittels externer Heizvorrichtungen möglich. Das Kunststoffmaterial des Kunststoffteils 13 ist in diesem Fall hauptsächlich als "Strukturwerkstoff" zu betrachten, auch wenn es auf Grund seiner thermischen Leitfähigkeit die Wärmeeinbringung in den Teilbereich des Endstücks 2a fördert.

Als unter dem Gesichtspunkt einer hinreichend großen Wärmeleitfähigkeit gewählter Kunststoff kann auch ein solcher verwendet werden, der gemäß den Ausführungen zu Figur 1 eine hohe elektrische Leitfähigkeit κ hat, sofern er den geforderten λ-Mindestwert erfüllt.

Selbstverständlich muss bei der Auswahl der einzelnen Materialien (d.h. des Memory-Metalls einerseits und des elektrisch und oder thermisch leitenden Kunststoffmaterials andererseits) die Phasenübergangstemperatur des Memory-Metalls berücksichtigt werden. Eine entsprechende Abstimmung der verwendeten Materialien ist mit bekannten Werkstoffen ohne Weiteres möglich, wobei insbesondere eine hinreichende mechanische Festigkeit des Kunststoffteils mit bekannten technischen Werkstoffen und Hochleistungswerkstoffen auch bei der vorgesehenen Übergangstemperatur zu gewährleisten ist. Vorteilhaft werden deshalb Memory-Metalle mit verhältnismäßig niedriger Übergangstemperatur gewählt.

Bei den in den Figuren schematisch angedeuteten Ausführungsformen erfindungsgemäßer Aktoreinrichtungen sind für deren Memory-Metall-Aktorelemente steifenförmige oder bandförmige Gestaltungsformen angenommen worden. Selbstverständlich können diese Elemente auch andere Gestaltungsformen haben. So können für diese Elemente insbesondere den mechanischen Verbund zwischen dem Memory-Metall und dem Kunststoffmaterial fördernde Ausgestaltungen wie z.B. Oberflächenaufrauungen oder zahnartige Ränder oder hakenartige Endformen vorgesehen werden. Eine mechanische Verhakung ist beispielsweise durch eine umlaufende Nut oder mittels einer Spiralform zu erreichen.

Vorteilhaft kann der Aufbau der Kunststoffteile 3 und 13 durch Einsatz elektrisch leitender Metall-Kunststoff-Compounds bzw. wärmeleitender Kunststoff-Compounds in Kombination mit Isolations-Compounds in einem an sich bekannten Zweikomponenten-Spritzgussverfahren realisiert werden (vgl. DE 35 04 816 A1 oder EP 0 311 875 A2). Dabei können die Memory-Metall-Elemente gezielt in der gewünschten Art und Weise fixiert werden, ohne dass sich die Memory-Metall-Eigenschaften verändern.

Bevorzugte Anwendungsbeispiele erfindungsgemäßer Aktoreinrichtungen sind Durchführungen für Sensor-Aktor-Kombinationen, Memory-Metall-Relais, Memory-Metall-Schalter, Einrichtungen mit Aktorelementen zur EMV-Ableitung, Wärmeschalter oder Wärmeleitfähigkeitsaktoren. Mit den Kunststoffteilen 3 bzw. 13 aus dem vorbestimmten Kunststoffmaterial werden folgende Funktionen integriert:
- Eine designgerechte Positionierung der Aktorelemente,
- eine stressfreie Befestigung dieser Elemente,
- eine rationelle Fertigung von Anschlüssen (elektrisch leitend bzw. wärmeleitend),
- eine rationelle Fertigung komplexer Formen.

## Patentansprüche

1. Aktoreinrichtung mit einem Aktorelement aus einem Memory-Metall,
- das in einem Ausgangszustand eine erste (Niedertemperatur-)Form einnimmt,
- dem bei einer Glühtemperatur eine zweite (Hochtemperatur-)Form eingeprägt ist,
- dem Mittel zum Aufheizen auf ein Temperaturniveau zugeordnet sind, bei dem die zweite (Hochtemperatur-)Form eingenommen wird,
und
- das in einem Teilbereich mit Mitteln zur mechanischen Verbindung versehen ist, wobei
die Verbindungsmittel das Aktorelement (2) in dem Teilbereich (2a) umschließen und zumindest teilweise aus einem Kunststoffmaterial bestehen, **dadurch gekennzeichnet, dass** das Kunststoffmaterial bei Raumtemperatur eine thermische Leitfähigkeit mit einer Wärmeleitzahl λ von mindestens 1,0 W/m·K und/oder eine elektrische Leitfähigkeit κ von mindestens 0,001 S/cm aufweist.

2. Einrichtung nach Anspruch 1, **gekennzeichnet durch** ein Kunststoffmaterial mit einer Wärmeleitzahl λ von mindestens 1,5 W/m.K, vorzugsweise mindestens 2,0 W/m·K, und/oder einer elektrischen Leitfähigkeit κ von mindestens 0,01 S/cm, vorzugsweise mindestens 0,1 S/cm.

3. Einrichtung nach Anspruch 1 oder 2, **dadurch gekennzeichnet, dass** die Verbindungsmittel ein ein Endstück (2a) des Aktorelementes (2) umschließendes Kunststoffteil (3, 13) aus dem vorbestimmten Kunststoffmaterial sind.

4. Einrichtung nach Anspruch 3, **dadurch gekennzeichnet, dass** das Kunststoffteil (3, 13) eine Umhüllung (7) aus einem Isolationsmaterial aufweist.

5. Einrichtung nach einem der vorangehenden Ansprüche, **dadurch gekennzeichnet, dass** als Kunststoffmaterial ein selbstleitender Kunststoff vorgesehen ist.

6. Einrichtung nach einem der Ansprüche 1 bis 4, **dadurch gekennzeichnet, dass** das Kunststoffmaterial einen Kunststoff als ein Basismaterial enthält, dem mindestens ein die Leitfähigkeit erhöhendes Additiv-Material hinzugefügt ist.

7. Einrichtung nach einem der vorangehenden Ansprüche, **dadurch gekennzeichnet, dass** zur Bestromung des Aktorelementes (2) ein elektrischer Anschlussleiter (6) vorgesehen ist, der über das Kunststoffmaterial mit dem Aktorelement (2) elektrisch leitend verbunden ist.

8. Einrichtung nach einem der vorangehenden Ansprüche, **gekennzeichnet durch** ein spritzgegossenes Kunststoffmaterial.

## Claims

1. Actuator device having an actuator element made from memory metal,
- which in a starting state adopts a first (low-temperature) shape,
- on which a second (high-temperature) shape is imposed at an elevated temperature,
- which is assigned means for heating to a temperature level at which the second (high-temperature) shape is adopted,
and
- which in a subregion is provided with means for mechanical connection, the connecting means surrounding the actuator element (2) in the subregion (2a) and at least partially comprising a plastics material, **characterized in that** the plastics material at room temperature has a thermal conductivity with a coefficient of thermal conductivity λ of at least 1.0 W/m·K and/or an electrical conductivity κ of at least 0.001 S/cm.

2. Device according to Claim 1, **characterized by** a plastics material with a coefficient of thermal conductivity λ of at least 1.5 W/m·K, preferably at least 2.0 W/m.K, and/or an electrical conductivity κ of at least 0.01 S/cm, preferably at least 0.1 S/cm.

3. Device according to Claim 1 or 2, **characterized in that** the connecting means are a plastics part (3, 13) which surrounds an endpiece (2a) of the actuator element (2) and is made from the predetermined plastics material.

4. Device according to Claim 3, **characterized in that** the plastics part (3, 13) has a sheath (7) made from an insulation material.

5. Device according to one of the preceding claims, **characterized in that** the plastics material provided is an inherently conductive plastic.

6. Device according to one of Claims 1 to 4, **characterized in that** the plastics material contains a plastic as a base material, to which at least one additive material that increases the conductivity has been added.

7. Device according to one of the preceding claims, **characterized in that** to energize the actuator element (2) there is an electrical connection conductor (6), which is electrically conductively connected to the actuator element (2) via the plastics material.

8. Device according to one of the preceding claims, **characterized by** an injection-moulded plastics material.

## Revendications

1. Dispositif actionneur ayant un élément actionneur en un métal à mémoire,
- qui prend dans un état initial une première forme (à basse température) ;
- auquel est imprimé à une température de recuit une deuxième forme (à haute température) ;
- auquel sont associés des moyens de chauffage à un niveau de température auquel la deuxième forme (à haute température) est prise ;
et
- qui est muni dans une zone partielle de moyens d'assemblage mécanique,
dans lequel
les moyens d'assemblage entourent l'élément (2) actionneur dans la zone (2a) partielle et sont au moins en partie en une matière plastique,
**caractérisé en ce que** la matière plastique a, à la température ambiante, une conductivité thermique ayant un indice λ de conductivité thermique d'au moins 1,0 W/m.K et/ou une conductivité κ électrique d'au moins 0,001 S/cm.

2. Dispositif suivant la revendication 1, **caractérisé par** une matière plastique ayant un indice λ de conductivité thermique d'au moins 1,5 W/m.K, de préférence d'au moins 2,0 W/m.K et/ou une conductivité κ électrique d'au moins 0,01 S/cm, de préférence d'au moins 0,1 S/cm.

3. Dispositif suivant la revendication 1 ou 2, **caractérisé en ce que** les moyens d'assemblage sont une pièce (3, 13) en la matière plastique prédéterminée entourant un embout (2a) de l'élément (2) actionneur.

4. Dispositif suivant la revendication 3, **caractérisé en ce que** la pièce (3, 13) en matière plastique a une gaine (7) en une matière isolante.

5. Dispositif suivant l'une des revendications précédentes, **caractérisé en ce qu'**il est prévu comme matière plastique une matière plastique autoconductrice.

6. Dispositif suivant l'une des revendications 1 à 4, **caractérisé en ce que** la matière plastique contient une matière plastique comme matière de base, à laquelle est ajouté au moins un additif augmentant la conductivité.

7. Dispositif suivant l'une des revendications précédentes, **caractérisé en ce qu'**il est prévu pour alimenter en courant électrique l'élément (2) actionneur un conducteur (6) électrique de connexion, qui est relié d'une manière conductrice de l'électricité à l'élément (2) actionneur par la matière plastique.

8. Dispositif suivant l'une des revendications précédentes, **caractérisé par** une matière plastique injectée.
